# EUROPEAN PATENT APPLICATION

(11) **EP 4 316 872 A1**
(43) Date of publication of application: **07.02.2024**
(21) Application number: 21935126.9
(22) Date of filing: 05.11.2021
(51) Int. Cl.: B60C 17/00, B60C 5/14

(54) **RUN-FLAT TIRE**

(30) Priority: 31.03.2021 JP 2021062035
(71) Applicant: BRIDGESTONE CORPORATION, Chuo-ku Tokyo 104-8340 (JP)
(72) Inventor: SAKIYAMA Tomotaka, Tokyo 104-8340 (JP)
(74) Representative: Marks & Clerk LLP
(86) International application number: PCT/JP2021/040882
(87) International publication number: WO 2022/208970

(57) **Abstract**

The run flat tire according to this disclosure comprises a tread portion, sidewall portions, bead portions, a side-reinforcing rubber, and a carcass. An inner liner is provided on the tire inner surface, and an inner layer rubber is disposed between the side-reinforcing rubber and the inner liner. In accordance with JIS K6270, when the dumbbell-shaped No. 8 specimens having 1 mm notch in a direction perpendicular to the direction of repeated tension at the center thereof are subjected to repeated tension at a frequency of 10 Hz under the conditions of 150°C, the number of repetitions until the specimen of the inner layer rubber fails is, in the range of 10% to 30% of the tensile strain applied, at least twice that of the side-reinforcing rubber, and in the reference condition, the ratio t2/t1 is 0.05 to 0.30.

## Description

### TECHNICAL FIELD

This disclosure relates to a run flat tire.

### BACKGROUND

As an inflated tire, a run flat tire comprising a side-reinforcing rubber having a crescent-shaped cross section in the sidewall portion is known (e.g., PTL1). According to such a run flat tire, even if, for example, the tire is punctured and the internal pressure drops, the side-reinforcing rubber can carry the load instead for a considerable distance.

### CITATION LIST

### Patent Literature

PTL 1: PTL 1: 2011/184000 A1

### SUMMARY

### (Technical Problem)

In the run flat tire, especially under run flat driving conditions, the innermost part of the side-reinforcing rubber is subject to high temperature and high strain due to large deflection, which may cause cracks in the side-reinforcing rubber, thereby reducing run flat durability.

It is therefore an object of this disclosure to provide a run flat tire reduced with the deterioration in run flat durability.

### (Solution to Problem)

The gist structure of this disclosure is as follows:
(1) A run flat tire comprising:
   a tread portion;
      a pair of sidewall portions connected to both sides of said tread portion;
      bead portions connected to each of said sidewall portions;
      a side-reinforcing rubber having a crescent-shaped cross section disposed in said sidewall portion; and
      a carcass straddling toroidally between a pair of said bead portions;
   wherein,
      an inner liner is provided on the tire inner surface,
      an inner layer rubber is disposed between said side-reinforcing rubber and said inner liner,
      in accordance with JIS K6270, when the dumbbell-shaped No. 8 specimens having 1 mm notch in a direction perpendicular to the direction of repeated tension at the center thereof are subjected to repeated tension at a frequency of 10 Hz under the conditions of 150°C, the number of repetitions until the specimen of said inner layer rubber fails is, in the range of 10% to 30% of the tensile strain applied, at least twice that of the side-reinforcing rubber, and
      in a reference condition with said run flat tire mounted on an applicable rim, filled with prescribed internal pressure, and unloaded, the ratio t2/t1, which is the ratio to the maximum thickness t1 of said side-reinforcing rubber 6 measured in the direction of a perpendicular line from said carcass down to said tire inner surface, of the thickness t2 of said inner layer rubber measured in the direction of said perpendicular line is 0.05 to 0.30.

As used herein, the term "applicable rim" refers to the standard rim in the applicable size (Measuring Rim in ETRTO's STANDARDS MANUAL and Design Rim in TRA's YEAR BOOK) as described or as may be described in the future in the industrial standard, which is valid for the region in which the tire is produced and used, such as JATMA YEAR BOOK of JATMA (Japan Automobile Tyre Manufacturers Association) in Japan, STANDARDS MANUAL of ETRTO (The European Tyre and Rim Technical Organization) in Europe, and YEAR BOOK of TRA (The Tire and Rim Association, Inc.) in the United States (That is, the "rim" above includes current sizes as well as future sizes to be listed in the aforementioned industrial standards. An example of the "size as described in the future" could be the sizes listed as "FUTURE DEVELOPMENTS" in the ETRTO 2013 edition). For sizes not listed in the above industrial standards, the term "applicable rim" refers to a rim with a width corresponding to the bead width of the pneumatic tire. Further, the "prescribed internal pressure" refers to the air pressure (maximum air pressure) corresponding to the maximum load capacity of a single wheel in the applicable size and ply rating, as described in the aforementioned JATMA YEAR BOOK and other industrial standards. In the case that the size is not listed in the aforementioned industrial standards, the "prescribed internal pressure" refers to the air pressure (maximum air pressure) corresponding to the maximum load capacity specified for each vehicle in which the tire is mounted.

Further, the term "elastic modulus" described below shall mean the tensile modulus when the vulcanized rubber is processed into dumbbell-shaped No. 8 specimens and elongated by 25% at a measurement temperature of 25°C, based on the tensile modulus at 25% elongation at 25°C (JIS K 6251: 2017).

Furthermore, the "bead baseline" shall mean a hypothetical line passing through the bead base and parallel to the tire width direction in the above reference condition.

### (Advantageous Effect)

According to this disclosure, it is possible to provide a run flat tire reduced with the deterioration in run flat durability.

### BRIEF DESCRIPTION OF THE DRAWINGS

In the accompanying drawings:

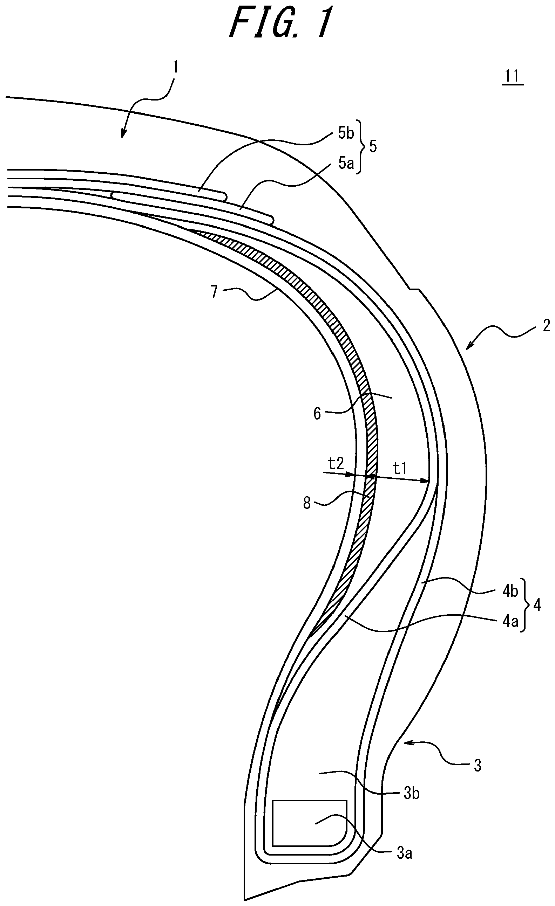

FIG. 1 is a partial cross-sectional view in the tire width direction of a run flat tire according to one embodiment of this disclosure.

### DETAILED DESCRIPTION

FIG. 1 is a partial cross-sectional view in the tire width direction of a run flat tire according to one embodiment of this disclosure. FIG. 1 illustrates the cross-section in the tire width direction of the run flat tire, in the aforementioned reference condition.

As illustrated in FIG. 1, this run flat tire (hereinafter, referred to simply as "tire") 10 comprises a tread portion 1 comprising a tread rubber, sidewall portions 2 comprising a pair of sidewall rubbers connected to both sides of the tread portion 1, bead portions 3 connected to each sidewall portions 2.

As illustrated in FIG. 1, each bead portion 3 has a bead core 3a embedded therein. In this example, the bead filler 3b is disposed on the outer side of the bead core 3a in the tire radial direction.

The tire 1 further comprises a carcass 4 consisting of one or more carcass plies that straddle toroidally between a pair of bead portions 3. The carcass ply is made of organic fiber cords in this example. The carcass 4 includes a carcass body portion 4a, which is fastened to the bead core, and a carcass fold portion 4b, which extends from the carcass body portion 4a and is folded around the bead core 3a. In the illustrated example, the carcass fold portion 4b extends to the inner side in the tire width direction beyond the belt edge and terminates, which is the so-called envelope structure. However, not limited to this example, the end of the carcass fold portion 4b may be located, for example, on the inner side in the tire radial direction of the tire maximum width position.

Further, a belt 5 comprising one or more belt layers 5a and 5b (two layers in the illustrated example) is disposed outer side in the tire radial direction of the crown of the carcass 4. The belt cords of the two belt layers extend across each other between the layers, and the belt cords can extend, for example, at an angle of 30 to 60 degrees with respect to the tire circumferential direction. The belt cords are steel cords in this example.

This tire 1 comprises a side-reinforcing rubber having a crescent-shaped cross section 6 in the sidewall portion 2. By disposing such side-reinforcing rubber 6, the side-reinforcing rubber 6 which contributes to supporting the weight of the vehicle body allows the vehicle to travel safely for a certain distance even when the internal pressure of the tire has decreased due to a flat tire or other reasons. In the illustrated example, in the cross section in the tire width direction, the side-reinforcing rubber 6 has a shape in which the thickness thereof in the tire width direction gradually decreases from around the center of the side-reinforcing rubber 6 toward the inside and outside of the same, and protrudes convexly outward in the tire width direction.

As illustrated in FIG. 1, the tire 1 according to this embodiment comprises an inner liner 7 on the tire inner surface. In this example, the inner liner 7 is made of butyl rubber. In this tire 1, the inner layer rubber 8 is disposed between the side-reinforcing rubber 6 and the inner liner 7. In the illustrated example, the inner layer rubber 8 is located over the entire area where the side-reinforcing rubber 6 and the inner liner 7 are adjacent to each other. In accordance with JIS K6270:2001, when the dumbbell-shaped No. 8 specimens having 1 mm notch in a direction perpendicular to the direction of repeated tension at the center thereof are subjected to repeated tension at a frequency of 10 Hz under the conditions of 150°C, the number of repetitions until the specimen of the inner layer rubber fails is, in the range of 10% to 30% of the tensile strain applied, at least twice that of the side-reinforcing rubber. In terms of material, the inner layer rubber 8 is made of rubber that does not contain copolymers of isobutylene and isoprene (for example, rubber blended with butadiene rubber and natural rubber).

Further, in the reference condition, the ratio t2/t1, which is the ratio to the maximum thickness t1 of the side-reinforcing rubber 6 measured in the direction of a perpendicular line from the carcass 4 down to the tire inner surface, of the thickness t2 of the inner layer rubber measured in the direction of that perpendicular line is 0.05 to 0.30.

The following is a description of the effects of the run flat tire according to this embodiment.

The innermost part of the side-reinforcing rubber during run-flat driving is subject to high temperature and high strain conditions due to large deflection. Therefore, the side-reinforcing rubber is required not only to support loads in run-flat conditions, but also to resist fracture under high temperature and high strain conditions.

The inventor has found that separating the rubber disposed in the tire side portion into two layers in the tire width direction and having each layer take on the above two functions respectively, thereby maximizing the above functions, is an effective solution to the above problem.

Specifically, the side-reinforcing rubber 6 is responsible for load support, while the inner layer rubber 8 is responsible for fracture control from the tire inner surface. In other words, the above ratio t2/t1 is 0.30 or less to ensure the volume of the side-reinforcing rubber 6 to provide sufficient load bearing capacity. Further, the inner layer rubber 8 has a high peeling resistance, because, in accordance with JIS K6270:2001, when the dumbbell-shaped No. 8 specimens having 1 mm notch in a direction perpendicular to the direction of repeated tension at the center thereof are subjected to repeated tension at a frequency of 10 Hz under the conditions of 150°C, the number of repetitions until the specimen of the inner layer rubber fails is, in the range of 10% to 30% of the tensile strain applied, at least twice that of the side-reinforcing rubber. By setting the ratio t2/t1 to 0.05 or more, the volume of the inner layer rubber 8 with such high peeling resistance can be secured to ensure sufficient fracture resistance under high temperature and high strain conditions. In particular, if the volume of the side-reinforcing rubber 6 is reduced by the amount of the inner layer rubber 8 added, the increase in tire weight can be controlled.

As described above, the run flat tire according to this embodiment can reduce the deterioration of run flat durability.

Here, the above number of repetitions of the inner layer rubber 8 is preferably 10 times or more than the above number of repetitions of the side-reinforcing rubber 6. By making it 10 times or more, the crack resistance can be further enhanced to further improve run-flat durability.

In accordance with JIS K6270:2001, when the dumbbell-shaped No. 8 specimens having 1 mm notch in a direction perpendicular to the direction of repeated tension at the center thereof are subjected to repeated tension at a strain of 30% and a frequency of 10 Hz under the conditions of 150°C, the number of repetitions until the specimen of the inner layer rubber 8 fails is preferably 70,000 or more. This is because the use of such inner layer rubber 8 can further enhance crack resistance and run-flat durability.

The ratio of the elastic modulus of the inner layer rubber 8 to the elastic modulus of the side-reinforcing rubber 6 is preferably 0.75 or less (preferably 0.6 or less). This is because the reduction in ride comfort can be further prevented.

The inner layer rubber 8 is preferably located in an area, in the tire radial direction, of 50% or more and 80% or less of the tire cross-sectional height from the bead baseline.

Further, the tread-side end of the inner layer rubber 8 is preferably located in an area, in the tire radial direction, of 60% or more of the tire cross-sectional height from the bead baseline. Also, the bead-side end of the inner layer rubber 8 is preferably located in an area, in the tire radial direction, of 30% or less of the tire cross-sectional height from the bead baseline. This is because, if the upper end is set to 60% or more and the lower end is set to 30% or less, the inner layer rubber covers the high strain area of the reinforcing rubber during run flat driving and prevents the crack propagation from the inner surface, thereby improving durability during run flat driving.

### EXAMPLES

In order to verify the effectiveness of this disclosure, the test was conducted to evaluate tire performance by building prototypes of tires for the Example and Comparative example with tire size PSR 235/60R18.

Comparative Example: The side-reinforcing rubber was made of one type of rubber.

Example: The inner layer rubber, which had an elastic modulus of 31% of that of the side-reinforcing rubber, was arranged so that the ratio of the gauge of the inner layer rubber to that of the side-reinforcing rubber was 0.09 at the thickest gauge of the side-reinforcing rubber. The inner layer rubber had the above number of repetitions that is 4 times than that of the side-reinforcing rubber. Other configurations were the same as in the Comparative Example.

### <Run flat durability>

The run-flat durability was evaluated under the rim, internal pressure, and load conditions in accordance with ISO standards. The results are expressed as an index with the result of the Comparative example set at 100, with a larger index indicating better performance.

### <Vertical spring coefficient>

The vertical spring coefficient was calculated when the tire was rimmed on a JATMA compliant rim, filled with an internal pressure of 230 kPa, and loaded with a load of 4320 N. The results are expressed as an index with the result of the Comparative example set at 100, with a smaller index indicating better performance.

The evaluation results are shown in Table 1 below.

**[Table 1]**

| | Comparative Example | Example |
|---|---|---|
| Figure | - | FIG.1 |
| Run flat durability (INDEX) | 100 | 172 |
| Vertical spring coefficient (INDEX) | 100 | 100 |

### REFERENCE SIGNS LIST

- 10: Run flat tire
- 1: Tread portion
- 2: Sidewall portion
- 3: Bead portion
- 4: Carcass
- 5: Belt
- 6: Side-reinforcing rubber
- 7: Inner liner
- 8: Inner layer rubber

## Claims

1. A run flat tire comprising:
a tread portion;
a pair of sidewall portions connected to both sides of said tread portion;
bead portions connected to each of said sidewall portions;
a side-reinforcing rubber having a crescent-shaped cross section disposed in said sidewall portion; and
a carcass straddling toroidally between a pair of said bead portions; wherein,
an inner liner is provided on the tire inner surface,
an inner layer rubber is disposed between said side-reinforcing rubber and said inner liner,
in accordance with JIS K6270, when the dumbbell-shaped No. 8 specimens having 1 mm notch in a direction perpendicular to the direction of repeated tension at the center thereof are subjected to repeated tension at a frequency of 10 Hz under the conditions of 150°C, the number of repetitions until the specimen of said inner layer rubber fails is, in the range of 10% to 30% of the tensile strain applied, at least twice that of the side-reinforcing rubber, and
in a reference condition with said run flat tire mounted on an applicable rim, filled with prescribed internal pressure, and unloaded, the ratio t2/t1, which is the ratio to the maximum thickness t1 of said side-reinforcing rubber 6 measured in the direction of a perpendicular line from said carcass down to said tire inner surface, of the thickness t2 of said inner layer rubber measured in the direction of said perpendicular line is 0.05 to 0.30.

2. The run flat tire according to claim 1, wherein said number of repetitions of said inner layer rubber is 10 times or more than said number of repetitions of said side-reinforcing rubber.

3. The run flat tire according to claim 1 or 2, wherein in accordance with JIS K6270:2001, when the dumbbell-shaped No. 8 specimens having 1 mm notch in a direction perpendicular to the direction of repeated tension at the center thereof are subjected to repeated tension at a strain of 30% and a frequency of 10 Hz under the conditions of 150°C, the number of repetitions until the specimen of said inner layer rubber fails is 70,000 or more.

4. The run flat tire according to any one of claims 1 to 3, wherein the ratio of the elastic modulus of said inner layer rubber to the elastic modulus of said side-reinforcing rubber is 0.75 or less.

5. The run flat tire according to any one of claims 1 to 4, wherein the inner layer rubber is located in an area, in the tire radial direction, of 50% or more and 80% or less of the tire cross-sectional height from the bead baseline.
